# EUROPÄISCHE PATENTSCHRIFT

(11) **EP 1 747 082 B1**
(45) Veröffentlichungstag und Bekanntmachung des Hinweises auf die Patenterteilung: **19.03.2008**
(21) Anmeldenummer: 05748237.4
(22) Anmeldetag: 03.05.2005
(51) Int. Cl.: B23Q 11/10

(54) **WERKZEUGMASCHINE**
MACHINE TOOL
MACHINE-OUTIL

(30) Priorität: 07.05.2004 DE 202004007534 U
(43) Veröffentlichungstag der Anmeldung: 31.01.2007
(73) Patentinhaber: Licon MT GmbH & Co. KG, 88471 Laupheim-Untersulmetingen (DE)
(72) Erfinder: REHM, Hansjörg, 89584 Ehingen (DE); JÖRG, Reiner, Andreas, 89079 Ulm-Wiblingen (DE)
(74) Vertreter: Hentrich, Swen
(86) Internationale Anmeldenummer: PCT/DE2005/000829
(87) Internationale Veröffentlichungsnummer: WO 2005/108006

(56) Entgegenhaltungen:
- EP-A- 1 190 814
- WO-A-95/26247
- DE-A1- 10 238 203
- DE-C1- 4 205 273
- US-A- 3 763 885
- US-B1- 6 302 004

## Beschreibung

Die Erfindung betrifft eine Werkzeugmaschine mit einem Antriebsmotor und einem einer Arbeitsspindel zugeordneten Spannsystem für ein Werkzeug, mit einem System zur Minimalmengenschmierung, das eine mit einer Druckluftquelle verbundene erste Leitung und eine mit einer Schmiermittelquelle verbundene zweite Leitung aufweist, die in eine Mischkammer münden.

In der Praxis wird bei Werkzeugmaschinen das Prinzip der Minimalmengenschmierung verstärkt eingesetzt, um bei der Bearbeitung eines Werkstückes mit einem in der Werkzeugmaschine eingespannten Werkzeug eine ausreichende Kühlschmierung zur Verfügung zu stellen bei gleichzeitiger Vermeidung der Kosten und der Umweltbelastung, die bei dem Einsatz von großen Mengen flüssigen Schmiermittels entstehen. Eine Werkzeugmaschine der eingangs genannten Art ist in der DE 102 38 203 A1 offenbart, bei der ein in der Werkzeugaufnahme eines Spannfutters eingespanntes Werkzeug aus einer in Nähe des werkzeugseitigen Endes der Arbeitsspindel angeordneten Mischkammer mit dem Schmiermittel versorgt wird.

Im bisherigen Stand der Technik müssen die Vorteile der Minimalmengenschmierung allerdings erkauft werden mit einem höheren apparativen Aufwand und Platzbedarf, wenn für die Bearbeitung des Werkstückes mehrere Werkzeuge erforderlich sind, da die bekannte Minimalmengenschmierung nur zur Versorgung eines in der Werkzeugaufnahme eingespannten Werkzeuges möglich ist.

Der Erfindung liegt daher die Aufgabe zugrunde, eine Werkzeugmaschine der eingangs genannten Art so auszubilden, daß eine Minimalmengenschmierung von Werkzeugen in einem Revolverkopf ermöglicht ist.

Diese Aufgabe wird nach der Erfindung bei einer Werkzeugmaschine der eingangs genannten Art dadurch gelöst, daß das mehrfach vorhandene Spannsystem einem Revolverkopf mit einer Antriebswelle zugeordnet ist, daß jedes Spannsystem von einer zu dem Werkzeug führenden Mischleitung durchsetzt ist, die in der Arbeitsposition von der Mischkammer ausgeht, und daß die Antriebswelle relativ zu der Mischkammer sowie der ersten Leitung und der zweiten Leitung aus ihrer die Abdichtung der Mischkammer gegen die erste Leitung und die zweite Leitung gewährleisteten Stellung in eine die Mischleitung sowie die Mischkammer zum Wechsel des Spannsystems freigebende Trennstellung axial verschiebbar angeordnet ist.

Revolverköpfe sind aus der Technik bekannt, um an einem Antriebsmotor mehrere Werkzeuge bereitzustellen und diese schnell in die Arbeitsposition einwechseln zu können. Die Versorgung eines Revolverkopfes mit Minimalmengenschmierung wird erstmals durch die Erfindung ermöglicht, so daß die Vorteile des Einsatzes der Minimalmengenschmierung mit den Vorteilen der Verwendung eine Revolverkopfes kombiniert werden können. Die axiale Verschiebbarkeit der Antriebswelle stellt dabei sicher, daß die Spannsysteme ausgewechselt werden können, ohne daß die Dichtigkeit bei den Kontaktstellen der Mischkammer gefährdet ist.

Im Rahmen der Erfindung ganz besonders bevorzugt ist es, wenn die Mischleitung einstückig, ohne Dichtfugen ausgeführt ist. Bei der Minimalmengenschmierung nach der Erfindung ist zu beachten, daß die Druckluft und das Schmiermittel in der Mischkammer zusammengeführt werden, daß dort aber kein Aerosol oder keine feine Emulsion gebildet werden, sondern die Druckluft das auf der Innenfläche der Mischleitung verteilte Schmiermittel als Grenzflächenschmierung in Förderrichtung mitreißt. Jede Kante, Fuge, Nut oder allgemein Versackung bewirkt nun, daß das Schmiermittel sich zunächst in dieser Versackung ansammelt und diese auffüllt, bis weiteres Schmiermittel über die Oberfläche der aufgefüllten Versackung weiter transportiert wird. Da aber bei jedem Werkzeugwechsel, der in kurzen Taktzeiten erfolgt, der Schmierfilm abreißt, ist bei einer Vielzahl von Versackungen eine ausreichende Schmierung nicht gewährleistet, so daß sich durch die einstückige Mischleitung der große Vorteil ergibt, daß keinerlei Versackungen vorliegen, wobei die Mischleitung zweckmäßigerweise als ein Röhrchen, beispielsweise aus Kohlefasern, gebildet ist, das in die Spanneinrichtung in Kontakt zur Mischkammer eingeklebt ist.

Im Rahmen der Erfindung hat es sich weiterhin als zweckmäßig erwiesen, wenn die Spannsysteme durch Hohlschaftkegel gebildet sind, die spindelseitig Durchgangsöffnungen für die Mischleitungen aufweisen. Dies ermöglicht, daß die Mischleitung durch das gesamte Spannsystem und die Werkzeugaufnahme bis zu dem Werkzeug geführt werden kann und so keine Versackungen an Kontaktstellen bei der Übergabe des Schmiermittels aus einer Leitung in eine andere in Kauf genommen werden müssen.

Hinsichtlich der Einfachheit des Aufbaus ist es günstig, wenn die erste Leitung und die zweite Leitung koaxial, ineinander angeordnet als Hohlleitung zu der Mischkammer führen. Dabei sind die erste Leitung und die zweite Leitung über eine Drehdurchführung mit der Schmiermittelquelle beziehungsweise der Druckluftquelle verbunden.

Alternativ besteht auch die Möglichkeit, daß die erste Leitung und die zweite Leitung stationär angeordnet sind und der Antriebsmotor gegenüber der Hohlleitung mittels Lager drehbar gelagert ist. Mit dieser Ausführungsform sind erhebliche Kostenvorteile verbunden, da auf eine teure Drehdurchführung verzichtet werden kann, weil eine Rotation der Hohlleitung zur Ausnutzung von Zentrifugalkräften nicht erforderlich ist. Durch die Bereitstellung der Hohlleitung ist auch die Lagerung vereinfacht.

Im folgenden wird die Erfindung an einem in der Zeichnung dargestellten Ausführungsbeispiel näher erläutert; es zeigen:
- Fig. 1: einen Längsschnitt durch den Antriebsmotor einer Werkzeugmaschine mit einem Revolverkopf, und

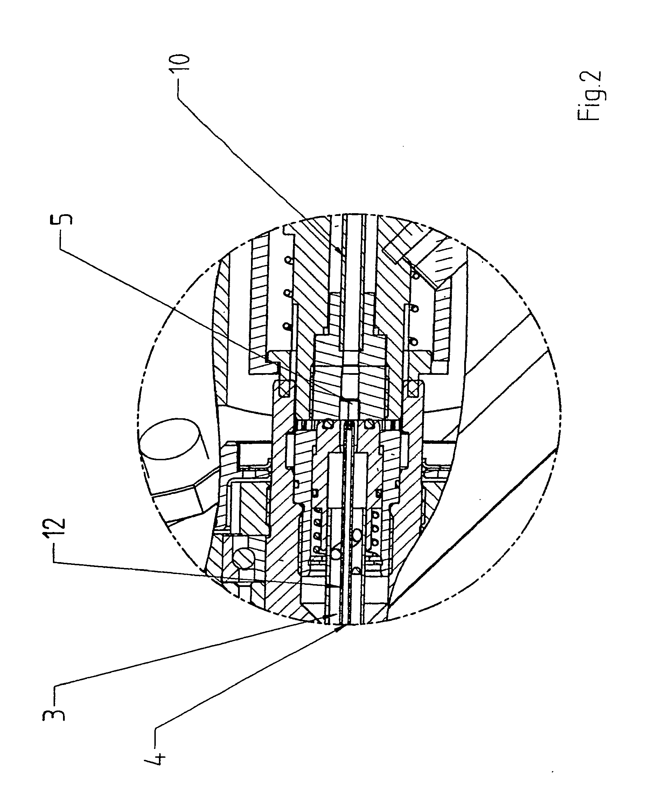

- Fig. 2: das Detail II aus Fig. 1.

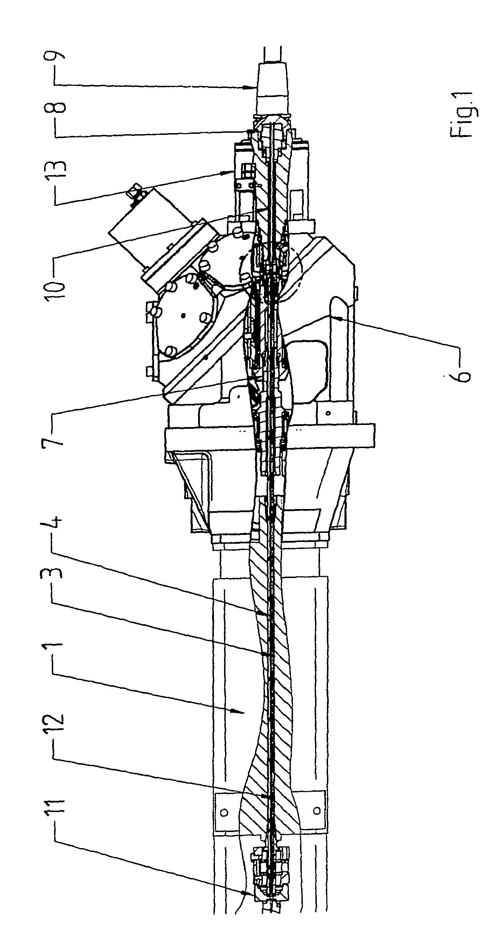

Zur besseren Übersicht ist von einer Werkzeugmaschine in der Fig. 1 lediglich ein Antriebsmotor 1 und ein der Arbeitsspindel 13 zugeordnetes Spannsystem 8 für ein Werkzeug gezeigt, wobei die Werkzeugmaschine über ein System zur Minimalmengenschmierung verfügt, das aus einer mit einer Druckluftquelle verbundenen ersten Leitung 3 und einer mit einer Schmiermittelquelle verbundenen zweiten Leitung 4 besteht, die in eine Mischkammer 5 münden. Das Spannsystem 8 ist einem Revolverkopf 6 mit einer Antriebswelle 7 zugeordnet und mehrfach vorhanden. Das Spannsystem 8 ist durch Hohlschaftkegel für jeweils ein Werkzeug 9 gebildet. Jedes Spannsystem 8 ist von einer zu dem Werkzeug 9 führenden, von der Mischkammer 5 ausgehenden Mischleitung 10 durchsetzt, die einstückig, ohne Dichtfugen und ohne Versackungen ausgebildet ist. Die Antriebswelle 7 als Koppelglied zwischen dem Antriebsmotor 1 und dem in der Arbeitsposition befindlichen Hohlschaftkegel ist axial relativ zu der Mischkammer 5 sowie der ersten Leitung 3 und der zweiten Leitung 4 verschiebbar angeordnet, so daß die Spannsysteme 8 jeweils nach Durchlaufen eines Arbeitstaktes ausgewechselt werden können und nach Erreichen der Arbeitsposition des neuen Spannsystems 8 die Dichtigkeit des Leitungssystems wieder hergestellt ist. Die Spannsysteme 8 weisen spindelseitig Durchgangsöffnungen für die Mischleitungen 10 auf, so daß diese bis zu dem Werkzeug 9 in der Werkzeugaufnahme des Spannsystems 8 geführt werden können.

Die erste Leitung 3 und die zweite Leitung 4 sind koaxial ineinander angeordnet, wobei bei dem in der Zeichnung dargestellten Ausführungsbeispiel diese über eine Drehdurchführung 11 mit der Schmiermittelquelle beziehungsweise der Druckluftquelle verbunden sind. Alternativ besteht auch die in der Zeichnung nicht dargestellte Möglichkeit, daß die erste Leitung 3 und die zweite Leitung 4 stationär angeordnet sind und der Arbeitsmotor 1 gegenüber der durch die erste Leitung 3 und die zweite Leitung 4 gebildeten Hohlleitung 12 mittels Lager drehbar gelagert ist.

## Patentansprüche

1. Werkzeugmaschine mit einem Arbeitsmotor (1) und einem einer Arbeitsspindel (13) zugeordneten Spannsystem (8) für ein Werkzeug (9), mit einem System zur Minimalmengenschmierung, das eine mit einer Druckluftquelle verbundene erste Leitung (3) und eine mit einer Schmiermittelquelle verbundene zweite Leitung (4) aufweist, die in eine Mischkammer (5) münden, **dadurch gekennzeichnet, daß** das mehrfach vorhandene Spannsystem (8) einem Revolverkopf (6) mit einer Antriebswelle (7) zugeordnet ist, daß jedes Spannsystem (8) von einer zu dem Werkzeug (9) führenden Mischleitung (10) durchsetzt ist, die in der Arbeitsposition von der Mischkammer (5) ausgeht, und daß die Antriebswelle (7) relativ zu der Mischkammer (5) sowie der ersten Leitung (3) und der zweiten Leitung (4) aus ihrer die Abdichtung der Mischkammer (5) gegen die erste Leitung und die zweite Leitung gewährleistenden Stellung in eine die Mischleitung (10) sowie die Mischkammer (5) zum Wechsel des Spannsystems (8) freigebende Trennstellung axial verschiebbar angeordnet ist.

2. Werkzeugmaschine nach Anspruch 1, **dadurch gekennzeichnet, daß** die Mischleitung (10) einstückig, ohne Dichtfugen ausgeführt ist.

3. Werkzeugmaschine nach Anspruch 1 oder 2, **dadurch gekennzeichnet, daß** das Spannsystem (8) durch Hohlschaftkegel gebildet sind, die spindelseitig Durchgangsöffnungen für die Mischleitungen (10) aufweisen.

4. Werkzeugmaschine nach einem der Ansprüche 1 bis 3, **dadurch gekennzeichnet, daß** die erste Leitung (3) und die zweite Leitung (4) koaxial, ineinander angeordnet als Hohlleitung (12) zu der Mischkammer (5) führen.

5. Werkzeugmaschine nach einem der Ansprüche 1 bis 4, **dadurch gekennzeichnet, daß** die erste Leitung (3) und die zweite Leitung (4) über eine Drehdurchführung (11) mit der Schmiermittelquelle bzw. der Druckluftquelle verbunden sind.

6. Werkzeugmaschine nach Anspruch 4, **dadurch gekennzeichnet, daß** die erste Leitung (3) und die zweite Leitung (4) stationär angeordnet sind und der Antriebsmotor (1) gegenüber der Hohlleitung (12) mittels Lager drehbar gelagert ist.

## Claims

1. Machine tool with a working motor (1) and a chucking system (8) assigned to a main spindle (13) for a tool (9), with a system for minimal quantity lubrication, which system has a first line (3) connected to a compressed air source and a second line (4) connected to a lubricant source, which lines open into a mixing chamber (5), **characterized in that** the chucking system (8), which is present severalfold, is assigned to a tool turret (6) with a drive shaft (7), that passing through each chucking system (8) is a mixing line (10) leading to the tool (9), which line starts out from the mixing chamber (5) in the working position, and that the drive shaft (7) is arranged relative to the mixing chamber (5) as well as the first line (3) and the second line (4) axially displaceably from its position guaranteeing the sealing off of the mixing chamber (5) from the first line and the second line into a separating position releasing the mixing line (10) and the mixing chamber (5) for a change of the chucking system (8).

2. Machine tool according to claim 1, **characterized in that** the mixing line (10) is executed in one piece, without sealing joints.

3. Machine tool according to claim 1 or 2, **characterized in that** the chucking system (8) is formed by hollow shaft cones, which have feed-through openings on the spindle side for the mixing lines (10).

4. Machine tool according to one of claims 1 to 3, **characterized in that** the first line (3) and the second line (4) lead coaxially, arranged inside one another as a hollow line (12), to the mixing chamber (5).

5. Machine tool according to one of claims 1 to 4, **characterized in that** the first line (3) and the second line (4) are connected to the lubricant source and the compressed air source respectively via a rotary transmission leadthrough (11).

6. Machine tool according to claim 4, **characterized in that** the first line (3) and the second line (4) are arranged stationarily and the drive motor (1) is supported rotatably relative to the hollow line (12) by means of bearings.

## Revendications

1. Machine-outil comportant un moteur de travail (1) et un système de serrage (8) pour un outil (9) associé à une broche de travail (13), un système de lubrification à dosage minimal comprenant une première conduite (3) reliée à une source d'air comprimé et une deuxième conduite (4) reliée à une source de lubrifiant qui débouchent dans une chambre de mélange (5), **caractérisée par le fait que** le système de serrage (8) multiple est associé à une tête revolver (6) avec un arbre d'entraînement (7), en ce que chaque système de serrage (8) est traversé par une conduite de mélange (10) menant à l'outil (9) qui, dans la position de travail, part de la chambre de mélange (5), et en ce que l'arbre d'entraînement (7), par rapport à la chambre de mélange (5) et aux première (3) et deuxième (4) conduites de mélange, peut être déplacé axialement de sa position, dans laquelle il assure l'étanchéité de ladite chambre de mélange (5) vis-à-vis des première et deuxième conduites, vers une position d'isolement de la conduite de mélange (10) et de la chambre de mélange (5) afin de permettre le changement du système de serrage (8).

2. Machine-outil selon la revendication 1, **caractérisée par le fait que** la conduite de mélange (10) est réalisée d'une pièce, sans joints d'étanchéité.

3. Machine-outil selon la revendication 1 ou 2, **caractérisée par le fait que** les systèmes de serrage (8) sont formés par des cônes creux qui présentent côté broche des ouvertures de passage pour les conduites de mélange (10).

4. Machine-outil selon les revendications 1 à 3, **caractérisée par le fait que** la première conduite (3) et la deuxième conduite (4) sont coaxiales et mènent sous forme de conduite creuse (12) à la chambre de mélange (5).

5. Machine-outil selon les revendications 1 à 4, **caractérisée par le fait que** la première conduite (3) et la deuxième conduite (4) sont reliées à la source de lubrifiant ou à la source d'air comprimé par un raccord tournant (11).

6. Machine-outil selon la revendication 4, **caractérisée par le fait que** la première conduite (3) et la deuxième conduite (4) sont stationnaires et que le moteur d'entraînement (1) est monté tournant par rapport à la conduite creuse (12) au moyen d'un palier.
